# EUROPEAN PATENT APPLICATION

(11) **EP 1 736 050 A1**
(43) Date of publication of application: **27.12.2006**
(21) Application number: 05717211.6
(22) Date of filing: 11.03.2005
(51) Int. Cl.: A01M 1/02, A01M 1/20, A01N 25/04

(54) **FOOD BAIT COMPRISING A SPECIFIC ATTRACTANT FOR COMBATING TEPHRITID INSECTS**

(30) Priority: 11.03.2004 ES 200400664
(71) Applicant: Ecología y Protección Agrícola S.L., 46022 Valencia (ES)
(72) Inventor: Primo Yufera, E., Univ. Politecnica de Valencia, 46022 Valencia (ES); Navarro Llopis, V., Univ. Politecnica de Valencia, 46022 Valencia (ES); Casana Giner, V., Univ. Politecnica de Valencia, 46022 Valencia (ES); Moya Sanz, P., Univ. Politecnica de Valencia, 46022 Valencia (ES)
(74) Representative: Ungria Lopez, Javier
(86) International application number: PCT/ES2005/000129
(87) International publication number: WO 2005/086999

(57) **Abstract**

The present invention refers to a food bait **characterized in that** it comprises at least:
- one or more food components,
- a preservative or a mixture of preservatives,
- at least one toxic ingredient and
- a fourth component selected between:
- - at least one specific attractant of tephritidae insects, and
- at least a moisture regulator and in that said bait is in the semi-solid gel form.

## Description

### Technical Field

This invention is encompassed within the technical field of pest control methods.

### State of the Art

The economically important control of tephritidae is currently carried out, for the most part, with organophosphorus insecticides by means of frequent aerial or ground sprayings. These methods, rather unselective as is well known, cause ecological imbalances and toxicity for humans and superior animals, therefore the search for new control methods is necessary.

An interesting option from the ecological point of view is the generically denominated attract and kill technique, consisting of selectively attracting the pest insect and controlling it, whether with conventional insecticides or, more preferably, with biorational insecticides, or even by means of contamination with microbiological agents. To date, this technique uses effective but short-lasting materials, therefore frequent replacements are required, thus causing a lack of their economic competitiveness against more conventional treatments.

The history of the use of food baits for control of tephritidae dates back to the 1920's with the use of animal wastes and sugars which were included in glass bait traps. The widespread use of protein hydrolyzates as fly food attractants in glass bait traps began in 1939. However, the use of protein hydrolyzates by spraying, mixed with an insecticide, was not carried out until the decade of the 1950's. Since then and until today, these insecticide baits have been sprayed in aerial or ground applications against, for example, to mention a few, the Mediterranean fly, the olive fruit fly or the melon fly (Howell et al., 1975; Caballero Garcia et al., 1971; Verma and Sinha, 1977).
These baits are attractants for flies, but they are furthermore phagostimulants, which greatly improves the efficacy of the toxic substances with which they are combined. Protein baits are currently used with conventional organophosphorus insecticides, such as malathion, fenthion, dimethoate, etc., or with more recently developed insecticides, such as spinosad, lambda-cyhalothrin or phloxine B (Vargas et al., 2001; McQuate et al., 1999).

To obtain a suitable control efficacy, the application of these baits must be carried out weekly since the activity disappears between the fifth and tenth day after their application possibly due to the fact that when the bait dries, it is no longer appetizing for the flies and ingestion of the insecticide does not occur. This implies that in order to cover the crop year, 4 to 8, or even more, applications of bait-insecticide must be carried out, depending on the pest pressure. To this fact it is necessary to add several further drawbacks. On one hand, there is a lack of selectivity of the food attractants, which are able to attract a range of insects not constituting the pest; the problem is especially serious when the attracted insect is part of the useful fauna. On the other hand is the drawback of the residue, both on the crops and in the environment, caused by this type of application.

A bait for insects in semi-solid gel form with a prolonged useful field life is not yet known, and much less for tephritidae. A related invention is disclosed in patent application W09922595, which claims the use of imidachloprid and the derivatives, analogues and salts thereof for the control of tephritidae, formulated with a gel that can be sprayed to adhere to the trunks of trees. These gels may also in turn be formulated with synthetic baits and/or natural protein baits. A fundamental difference with the present invention is that the formulation is sprayed, whereas in the present invention the semi-solid bait forms part of a localized device.

A document also related to the present invention is British patent GB 2356144, which claims a method for selectively luring fruit flies of the Tephritidae family to a particular site where an attractant mixture formed by a pyrazine, preferably 2,5-dimethylpyrazine, in combination with ammonium salts and putrescine (1,4-diaminobutane), is located. It in turn claims that the attractant combination can be used in combination with an insecticide, biopesticide or chemosterilizer. The fundamental difference with the present invention is that at no time does it describe the use of a phagostimulant bait.

Application WO-0061617 refers to food baits for their use in a tephritidae control method by means of the use of sterilizing agents and attractants but, amongst other drawbacks, said baits do not include a preservative, so their useful life is not as long as would be desirable.

In order to resolve the drawbacks of the state of the art, and especially those derived from the short duration of known baits and from the application methods, the design of a semi-solid, phagostimulant, toxic bait, specifically attractant for the plague to be controlled and which, due to is physicochemical characteristics is capable of preserving its properties for at least 12 months in field conditions, is described in the present invention. This useful life period of the bait is more than enough to cover the periods of activity of the insects at hand. This implies a great advance in the art because it requires a single annual placement that favors the cost-effectiveness of the method.

### Description of the Invention

The present invention has as a first object a food bait, characterized in that it comprises at least:
- one or more food components,
- a preservative or a mixture of preservatives,
- at least one toxic ingredient and
- a fourth component selected between:

- at least one specific attractant of tephritidae insects, and
- at least a moisture regulator
   and in that said bait is in the semi-solid gel form.

As used herein the term "semi-solid" gel refers to a hydrogel composition i.e., a gel composition which contains water, as opposed to a gel which contains an organic solvent, that can be a viscous liquid, a solid, or in any state in between based on the water concentration or other environmental factors such as temperature and humidity, but exists as a semi-solid under STP conditions (STP conditions: standard conditions of pressure ant temperature) when the relative humidity is between 25 and 85%.

A particular object of the invention is a food bait characterized in that it comprises at least:
- one or more food components,
- a preservative or a mixture of preservatives,
- at least one toxic ingredient and
- at least one specific attractant of tephritidae insects
   and in that said bait is in semi-solid gel form.

A particular object of the invention is a food bait characterized in that it comprises at least:
- one or more food components,
- a preservative or a mixture of preservatives,
- at least one toxic ingredient and
- at least one moisture regulator,
   and in that said bait is in semi-solid gel form.

The present invention further provides a system for controlling tephritidae insects comprising:
(1) a tephritidae insect food bait, characterized that comprises at least:
   - one or more food components,
   - a preservative or a mixture of preservatives,
   - at least one toxic ingredient and
   - at least one moisture regulator,
      and in that said bait is in semi-solid gel form; and
(2) at least one specific attractant of tephritidae insects adjacent to or in close proximity to said food bait.

The present invention also provides a device that comprises a housing comprising:
- a first receptical containing at least one specific attractant of tephritidae insects; and
- a second receptical containing, in a form accessible for the insects, a food bait, that comprises at least:
   o one or more food components,
   o a preservative or a mixture of preservatives,
   o at least one toxic ingredient and
   o at least one moisture regulator,
      and in that said bait is in semi-solid gel form;
   and in that said first receptical is adjacent to or is in close proximity to said second receptical.

Said preservative is preferably present in an amount comprised between 0.1% and 3% by weight with respect to the total food weight. The percentages in the present specification are weight/weight percentages with respect to the total food weight.

According to the present invention said preservative is preferably nipagin, nipasol or mixtures thereof.

As a toxic ingredient, at least one insecticide, at least one insect growth regulating agent, or mixtures thereof, can be used.

The baits are designed to be compatible with the chemical structures representative of the possible types of toxic ingredients, toxic ingredient being understood as an ingredient causing death or any disorder in the development or reproductive process in insects. They preferably, but not in a limiting manner, include organophosphorus insecticides (for example, malathion, fenthion, trichlorfon, pyridafenthion); carbamates; pyrethroids (such as deltamethrin, lambda-cyhalothrin), neonicotinoids (such as imidachloprid, thiamethoxam), insecticides of biological origin such as spinosad, avermectins or the different products derived from *Bacillus thuringiensis;* insect growth regulators, both analogues or antagonists of the juvenile hormone or the molting hormone as chitin synthesis inhibitors; phototoxic insecticides such as xanthene dyes or 6-amino-levulinic acid). The examples mentioned in each of the insecticide groups are merely mentioned with an illustrative character, without intending to be limiting.

Amongst the insect growth regulating agents one or more sterilizing agents may be used; to mention, for example, as an illustration, methoprene; pyriproxifen; cyromazine; diflubenzuron, triflumuron, lufenuron, novaluron, hexaflumuron type benzoylphenyl-ureas; buprofezin.

The toxic ingredient or ingredients to be included in the food bait may act through a route chosen from contact, ingestion and both.

The toxic ingredient or ingredients used must be incorporated to the bait in a stable and homogenous manner. The toxic ingredient may be included in the bait, on the surface of the bait or in both manners. Technically, both the inclusion of the active ingredient in the bait (preferably, but not limited to, homogenization, colloidal dispersion, microcapsule inclusion, in the case of the more unstable molecules, or any other technique that allows the homogenous and stable formulation of the toxic ingredient in the bait) as well as its possible arrangement on the surface of the bait, have been solved.

In one embodiment, the food bait may comprise one or several specific attractants that may be adsorbed on an emitter material chosen from one or more organic materials, one or more inorganic materials, and mixtures thereof.

According to this embodiment of the present invention, the specific attractant or attractants is or are preferably adsorbed on a material selected from microporous silicates, mesoporous silicates, microporous silicoaluminates, mesoporous silicoaluminates, microporous phosphoaluminates, mesoporous phosphoaluminates and mixtures thereof.

An essential aspect of this embodiment of the invention for the bait to be selectively effective in the control of insects, particularly tephritidae, is the inclusion of the attractant or attractants specific to the species to be controlled. It was observed that when the phagostimulant bait was used and state of the art emitters of the specific attractants were placed on its surface or close to it, competition between the latter and the bait occurred, such that the majority of the flies went and rested on the emitter; under these conditions, this fact led to an inevitable loss of efficacy of the technique. Thus, one of the features of the bait of the present invention is the inclusion in the gel of said selective attractants, preferably adsorbed in inorganic or organic materials, according to the state of the art, which can act as controlled-rate emitters in the array. Preferably, but not in a limiting manner, emitting materials such as those disclosed in patent applications WO9944420 and W00002448 can be used.

The specific attractant or attractants may be arranged in the bait in a manner selected from granular inclusions, powder inclusions, submerged tablet inclusions and inclusions of the bait on the surface.

In another embodiment, the specific attractant or attractants are not arranged in the bait, but are placed adjacent to or in close proximity to said semi-solid gel bait. In one embodiment, said bait contains at least one moisture regulator.

The specific attractant or attractants may be selected, as an example, from:
- ethyl acetate,
- acetic acid,
- ethanol,
- one or several nitrogenous compounds, chosen from free amines and amines in salt form or in the form of their corresponding amides,
- one or several volatile compounds of a host plant or fruit,
- one or several pheromone samples,
- one or several para-pheromone samples,
- one or several kairomone samples
   and
- mixtures thereof.

Ethyl acetate, acetic acid and ethanol (Casaña-Giner et al., 1999, J. Appl. Entomol. 92; 303-308) have been disclosed as attractants of the Mediterranean fly.

A particular embodiment of the invention is a food bait wherein the attractant is a mixture of ammonium acetate and putrescine, combined with at least one attractant selected among dimethylamine, trimethylamine and n-methylpyrrolidine, with the proviso that the attractant is not one of the mixtures: amomonium acetate + putrescine; ammonium acetate + putrescine + trimethylamine.

The use as tephritidae attractants of the following mixtures:
- ammonium acetate + methylamine + putrescine;
- ammonium acetate + trimethylamine + putrescine; and
- ammonium acetate + putrescine
   has been previously disclosed in WO-9807316.

The male or female pheromone or para-pheromone samples are quasi-specific. The term "quasi" refers to the fact that some tephritidae species can be attracted by the same pheromones.

Concrete examples of specific attractants, in addition to ethyl acetate, acetic acid and ethanol are: methylamine, dimethylamine, trimethylamine, ethylmethylamine, propylmethylamine, isopropylamine, tert-butylamine, 1-methylpyrrolidine, diethylamine, dimethylacetamide, furfuryl alcohol, 5-methyl-3-heptanone, geranyl butyrate, linalool, 1,3-diethylbenzene, 2-nonanone, (E)-2-hexanoic acid, ammonium acetate, ammonium phosphate, ammonia solution from 10% to 30% in water, putrescine, cadaverine, trimedlure, a trimedlure isomer, ceralure, 4-[(4-acetyloxy)phenyl]-2-butanone, methyleugenol, a fluorinated methyleugenol analogue, 1,7-dioxaspiro-5,5-undecane and mixtures thereof.

The following examples are male attractants that may be used, given only for illustrative purposes:
- Trimedlure and any of its isomeric combinations, Ceralure and any of its isomeric combinations, for *Ceratitis capitata*.
- 4-[(4-acetyloxy)phenyl]-2-butanone for *Bactrocera cucurbitae.*
- Methyleugenol or fluorinated methyleugenol analogues for *Bactrocera dorsalis.*
- 1,7-dioxaspiro-5,5-undecane for *Bactrocera oleae.*

Most of the attractants mentioned in the present invention are already known. However, their use has never been disclosed as part of a specific-toxic food-attractant bait or a system comprising such bait and which is further released in a controlled, effective and long-lasting manner.

Amongst the nitrogenous compounds, methylamine, trimethylamine, ammonium acetate, ammonium phosphate, putrescine, and bird faeces have already been disclosed as attractants of both genders of tephritidae (for example, Robacker et al., 1990, J. Chem. Ecol. 16; 2,779-2,815; Nakagawa et al., 1970, J. Econom. Entomol. 63, 227-229).

Amongst the volatile compounds of host fruits or plants, bomeol and p-cymen may preferably be selected.

Amongst the nitrogenated compounds the following attractant mixtures may preferably be selected:
- ammonium acetate + trimethylamine + putrescine + n-methylpyrrolidine,
- ammonium acetate + putrescine + n-methylpyrrolidine.

According to the present invention, the food baits comprise one or more food components, which may be one or more protein sources, one or more carbohydrates and mixtures thereof.

According to the present invention, the food bait comprises at least one food component which may be one or more carbohydrates. Said at least one carbohydrate may preferably be present in an amount comprised between 5% and 50% by weight with respect to the total food weight.

Examples of carbohydrates are, for example, a commercial invert sugar, glucose, fructose, sucrose, a fructose-enriched sucrose hydrolyzate, maltose, lactose and mixtures thereof. Said sucrose hydrolyzate may be enriched in fructose by means of a fructose isomerase.

As a food component the bait may comprise at least one protein source. Said at least one protein source is preferably present in an amount comprised between 2% and 70% by weight with respect to the total food weight.

Examples of said at least one protein source are commercial corn mash liquor, yeast lysate, soy protein hydrolyzate, other protein source derivatives and mixtures thereof.

The food component of the bait may comprise a mixture of at least one protein source and at least one carbohydrate.

According to the present invention, the food bait may further comprise at least one moisture regulator.

Said at least one moisture regulator is preferably present in an amount comprised between 3% and 40% by weight with respect to the total food weight.

Examples of moisture regulators are glycerol, mannitol, sorbitol, xylitol, propylene glycol and mixtures thereof.

According to the present invention, the food bait may further comprise at least one emulsifier.

Said at least one emulsifier is preferably present in an amount comprised between 0.05% and 10% by weight with respect to the total food weight.

Examples of emulsifiers are alkylsulfonates, arylsulfonates, polyalcohol derivatives, polyoxyethylene derivatives, phosphatides and mixtures thereof.

According to the present invention, the food bait may further comprise at least one texturizing agent. Preferably said at least one texturizing agent is present in an amount comprised between 0.1 % and 10% by weight with respect to the total food weight.

Examples of texturizing agents are pectins, alginates, crystalline cellulose, carboxymethylcellulose, methylcellulose and mixtures thereof.

According to a particular embodiment the food bait comprises:
- a preservative or mixture of preservatives,
- at least one carbohydrate,
- at least one protein source,
- at least one moisture regulator,
- at least one emulsifier and
- at least one texturizing agent,
   and is in semi-solid gel form.

According to an additional particular embodiment the food bait comprises:
- a preservative or mixture of preservatives,
- at least one toxic ingredient and
- at least one specific attractant of tephritidae insects,
- at least one carbohydrate,
- at least one protein source,
- at least one moisture regulator,
- at least one emulsifier and
- at least one texturizing agent,
   and is in semi-solid gel form.

According to an additional particular embodiment of the present invention the food bait comprises at least:
- a preservative or mixture of preservatives in an amount comprised between 0.1 % and 3% by weight with respect to the total food weight,
- at least one toxic ingredient,
- at least one specific attractant of tephritidae insects,
- at least one carbohydrate,
- at least one protein source,
- at least one moisture regulator,
- at least one emulsifier and
- at least one texturizing agent,
   and is in semi-solid gel form.

According to an additional particular embodiment the food bait comprises:
- a preservative or mixture of preservatives in an amount comprised between 0.1 % and 3% by weight with respect to the total food weight,
- at least one toxic ingredient which is one or more sterilizing agents,
- at least one specific attractant of tephritidae insects,
- at least one carbohydrate chosen from a commercial invert sugar, glucose, fructose, sucrose, fructose-enriched sucrose hydrolyzate, maltose, lactose and mixtures thereof,
- at least one protein source in an amount comprised between 2% and 70% by weight with respect to the total food component weight,
- at least one moisture regulator in an amount comprised between 3% and 40% by weight with respect to the total food component weight,
- at least one emulsifier in an amount comprised between 0.05% and 10% by weight with respect to the total food component weight,
- at least one texturizing agent in an amount comprised between 0.1% and 10% by weight with respect to the total food component weight,
   and is in semi-solid gel form.

According to an additional particular embodiment the food bait comprises:
- a preservative or mixture of preservatives in an amount comprised between 0.1% and 3% by weight with respect to the total food component weight,
- a effective amount of a chemosterilizing agent that is lufenuron (for example, from 1 - 5% by weight; more particularly, between 2 - 4% by weight; such as 3% by weight with respect to the total food component weight)
- at least one carbohydrate chosen from a commercial invert sugar, glucose, fructose, sucrose, fructose-enriched sucrose hydrolyzate, maltose, lactose and mixtures thereof,
- at least one protein source in an amount comprised between 2% and 70% by weight with respect to the total food component weight,
- at least one moisture regulator in an amount comprised between 3% and 40% by weight with respect to the total food component weight,
- at least one emulsifier in an amount comprised between 0.05% and 10% by weight with respect to the total food component weight,
- at least one texturizing agent in an amount comprised between 0.1 % and 10% by weight with respect to the total food weight,

According to an additional particular embodiment the food bait comprises:
- a preservative chosen from nipagin, nipasol and mixtures thereof,
- at least one toxic ingredient chosen from at least one insecticide, at least one growth regulating agent and mixtures thereof,
- at least one specific attractant of tephritidae insects, chosen from
   - ethyl acetate,
   - ethanol,
   - acetic acid,
   - one or several nitrogenous compounds,
   - one or several volatile compounds of a host plant or fruit,
   - one or several pheromone samples,
   - one or several para-pheromone samples,
   - one or several kairomone samples and
   - mixtures thereof,
   - at least one carbohydrate source chosen from a commercial invert sugar, glucose, fructose, sucrose, a fructose-enriched sucrose hydrolyzate, maltose, lactose and mixtures thereof,
   - at least one protein source chosen from commercial corn mash liquor, yeast lysates, soy protein hydrolyzate and mixtures thereof,
   - at least one moisture regulator chosen from glycerol, mannitol, sorbitol, xylitol, propylene glycol and mixtures thereof,
   - at least one emulsifier chosen from alkylsulfonates, arylsulfonates, polyalcohol derivatives, polyoxyethylene derivatives, phosphatides and mixtures thereof,
   - at least one texturizing agent chosen from pectins, alginates, crystalline cellulose, carboxymethylcellulose, methylcellulose and mixtures thereof.

In any of the previously defined particular embodiments of the food bait containing a specific attractant of tephritidae insects, the specific attractant of tephritidae insects may be adsorbed on organic or inorganic materials or mixtures thereof.

In any of the previously defined particular embodiments of the food bait not containing a specific attractant of tephritidae insects, the food bait may be employed in a chemosterilization system where the bait placed adjacent to or in close proximity to a specific attractant of tephritidae insects. In one embodiment, a suitable system is a device for controlling tephritidae insects, characterized in that it comprises a housing comprising a first receptical containing at least one specific attractant of tephritidae insects; and a second receptical containing such food bait, in a form accessible for the insects.

According to a particular embodiment, such device comprises a housing comprising:
- a first receptical containing at least one specific attractant of tephritidae insects, chosen from
   o ammonium acetate
   o trimethylamine
   o dimethylpyrazine
   o dimethylamine
   o 1-methylpyrrolidine
   o Putrescine
   o trimedlure; and
- a second receptical containing, in a form accessible for the insects, a food bait, characterized in that it comprises:

- a preservative or mixture of preservatives in an amount comprised between 0.1 % and 3% by weight with respect to the total food component weight,
- a sterilizing effective amount of lufenuron,
- at least one carbohydrate chosen from a commercial invert sugar, glucose, fructose, sucrose, fructose-enriched sucrose hydrolyzate, maltose, lactose and mixtures thereof,
- at least one protein source in an amount comprised between 2% and 70% by weight with respect to the total food weight,
- at least one moisture regulator in an amount comprised between 3% and 40% by weight with respect to the total food weight,
- at least one emulsifier in an amount comprised between 0.05% and 10% by weight with respect to the total food weight,
- at least one texturizing agent in an amount comprised between 0.1% and 10% by weight with respect to the total food weight,
   and is in semi-solid gel form;
and in that said first receptical is adjacent to or is in close proximity to said second receptical.

In one embodiment, the device comprises a housing comprising a base tray and a cover:
- said cover comprises a centrally disposed first cup;
- said base tray comprises a centrally disposed second cup and a peripheral receptical for holding tephritidae insect food bait;
   wherein the cover engages the base over the opening of the bait receptical by joining said first and second cups to form a receptical for holding specific attractants of tephritidae insects.

According to another particular embodiment, the specific attractant of tephritidae insects used in the system or device is the combination of:
- ammonium acetate + 1-methylpyrrolidine + putrescine + trimedlure.

In one embodiment, said attractant combination is employed in a stacked array of specific attractants adsorbed in inorganic or organic materials, according to the state of the art, which can act as controlled-rate emitters in the array.

An additional object of the present invention is the use of a bait such as that previously defined to control the insects. Preferably the insects are of the Tephritidae family. Examples of insects of the Tephritidae family are insects of species belonging to the the *Bactrocera* spp., *Ceratitis* spp., *Anastrepha* spp. and *Rhagoletis* spp. genera.

The bait according to the present invention was tested with the following tephritidae species of economic importance, showing a suitable consumption response in all cases: *Platyparea poeciloptera* (Schrank) (asparagus fly), *Rhagoletis cingulata* (Loew) (cherry fruit fly), *Rhagoletis pomonella* (Walsh) (apple maggot fly), *Rhagoletis* fausta (Osten Sacken) (black cherry fruit fly), *Rhagoletis mendax* (Curran) (blueberry maggot fly), *Anastrepha obliqua* (MacQuart) (West Indian fruit fly), *Toxotrypana curvicauda* (papaya fruit fly), *Ceratitis capitata* (Wiedemann) (Mediterranean fly or Mediterranean fruit fly), *Bactrocera cucurbitae* (Coquillet) (melon fly), *Anastrepha ludens* (Loew) (Mexican fruit fly), Anastrepha *suspensa* (Loew) (Caribbean fruit fly), *Anastrepha fraterculus* (Wiedemann) (South American fruit fly), *Bactrocera oleae* (Gmelin) (olive fruit fly), *Bactrocera dorsalis* (Hendel) (Oriental fruit fly) and *Bactrocera tryoni* (Froggatt) (Queensland fruit fly). However, the present invention can be applied to any other tephritidae species. Today, some species are called "Bactrocera", rather than their former denomination "Dacus". The scientific names and common names have been written according to "Common Names of Insects and Related Organisms", 1978, Sutherland D.W.S., Entomological Society of America, Lanham, U.S.A., and according to "Insects of Economic Importance. A Checklist of Preferred Names", 1989, Wood A.M., C.A.B. International, United Kingdom.

The bait of the present invention is maintained in optimal conditions for consumption by flies, as has been mentioned, for at least 12 months. Furthermore, it shows a hydrodynamic behavior, adapting itself to the circadian cycle of ambient moisture and temperature, such that it is able to lose and recover moisture daily, maintaining the optimum level thereof in the hours of maximum activity of the flies.

In summary, the present invention allows for providing a semi-solid, specifically attractant and toxic bait, suitable for being used in the attract and kill technique to control members of the tephritidae family in an ecologically and economically competitive manner.

### Brief Description of the Figures:

Figure 1 shows the attraction by sex of the different attractant, the attractant efficacy of the phagostimulant baits comprising 0.5% trimedlure (TML), or the ammonium acetate, isopropylmethylamine and putrescine mixture at a ratio of 10:10:1, at 6.3% by weight in the bait (AIP), or both at the same time. The phagostimulant bait is composed of the following components by weight: 80% soy hydrolyzate, 7% sucrose, 3% agar-agar, 0.25% nipagin, 0.25% nipasol and water up to 100%.
Figure 2 shows the effect on ingestion when different attractants are added to the bait. The attractants added to the bait were: 0.5% trimedlure (TML), the ammonium acetate, tert-butilamine and putrescine mixture at a ratio of 10:8:1 at 2.1% by weight in the bait (ATP) or both at the same time.
Figure 3 shows the effect of a bait incorporating 1,7-dioxaspiro-5,5-undecane adsorbed on sepiolite as an attractant.
Figure 4 shows the mortality results for *Ceratitis* capitata obtained with baits aged in the field for a one-year period.
Figure 5 shows the sterilizing efficacy results of the baits, aged in the field, for *Çeratitis capitata* and *Bactrocera oleae.*

The following examples serve to illustrate the invention.

Figure 6 shows the results of the comparative study of the attraction of males and females of *Çeratitis capitata* against different proportions of dimethylamine, trimethylamine, N-methylpyrrolidine or their mixtures, i.e., the capture of *Çeratitis* capitata depending on the attractant type.

Figure 7 shows the efficiency of the N-methylpyrrolidine as females attractant as a substituent of the trimethylamine device of the commercial emitter Tripack, i.e., capture percentage, expressed as a fraction, of the different attractant mixtures with respect to Tripack.

The following examples serve to illustrate the invention.

### EXAMPLE 1:

### Attraction caused by baits with specific attractants

In this first example, the attractant efficacy of phagostimulant baits when they incorporate or do not incorporate specific attractants is studied. To that end, an attraction test was carried out in the laboratory. 25 male and 25 female *Ceratitis capitata,* from 5 to 8 days of age, which had previously been fasting for 24 hours, were placed in metal wire cages ventilated with a small air current to prevent saturation of the enclosure. Plates of the bait with the different attractants were subsequently introduced. The attraction was measured by monitoring, every 5 minutes for 1 hour, the number of males and females resting on the bait.

The attractant bait had the following composition: 80% soy hydrolyzate as protein attractant, 7% sucrose as phagostimulant, 3% agar-agar as texturizing agent, 0.25% nipagin, 0.25% nipasol, both as preservatives, and water up to 100%.

The attractants added to the bait were: 0.5% trimedlure (TML), the ammonium acetate, trimethylamine and putrescine mixture at a ratio of 10:10:1, at 6.3% by weight in the bait (ATP), or both at the same time.

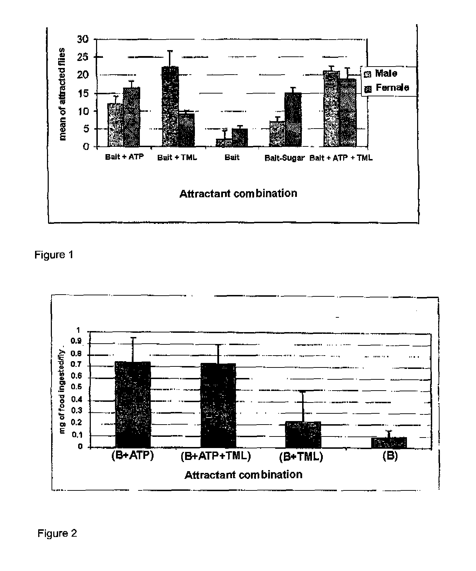

The results are shown in Figure 1. As is observed in the graph in Figure 1, the most attracting composition for both genders is that corresponding to adding the ATP + TML combination in the bait.

### EXAMPLE 2:

### Test for the ingestion of balt by the fly depending on the specific attractants added

To study how the *Ceratitis capitata* (Wiedemann) attractants affect the ingestion of baits, gels with different attractants were placed in cages with 500 flies for 24 hours. In order to quantify the amount of bait ingested by the flies, the bait plate was weighed prior to being introduced in the cage. In turn, in order to discount the weight variations of the bait due to the ambient moisture, a bait placed in an empty cage was used as a control, the weight variation of which acted as a correction for the test bait plates. The bait used as base had the following composition: 75% corn protein hydrolyzate as protein attractant, 8% glucose as phagostimulant, 8% calcium pectate as texturizing agent, 0.5% nipagin and 0.5% nipasol as preservative and water up to 100%. The attractants added to the bait were: 0.5% trimedlure (TML), the ammonium acetate, tert-butylamine and putrescine mixture at a ratio of 10:8:1, at 2.1% by weight in the bait (ATP), or both at the same time.

### EXAMPLE 3:

### Effect of the specific attractants incorporated to the bait.

When the commercial emitters of the specific attractants are placed on the surface of or next to the bait, it has been observed that competition between the latter and the emitting devices occurs, such that most flies go and rest on the emitter, where they remain for long periods of time and, in many cases, do not get to rest on the gel. As is obvious, this causes a loss of efficacy of the gel.

An important part of the present invention is intended to correct this deficiency and the following example illustrates the solution found. Thus, the attractant efficacy of a bait incorporating the attractant adsorbed in an adsorbent material is assessed as a specific but not restricting application manner. In this case, the adsorbent material is sepiolite and the adsorbed attractant is 1,7-dioxaspiro-5,5-undecane, 20% by weight with regard to sepiolite.

6 plates of 80 ml of gel are manufactured, placing 1 gram of sepiolite previously impregnated with the pheromone on 3 of them. The gel had the following composition: 80% soy hydrolyzate as protein attractant, 7% sucrose as phagostimulant, 3% agar-agar as texturizing agent, 0.25% nipagin and 0.25% nipasol as preservative and water up to 100%. To achieve the homogenous distribution of the attractant in the gel, these are mixed with a mechanical stirrer and poured on a Petri dish.

The 3 bait plates without attractant are placed in three wire cages of 30x30x30 cm with 30 male *Bactrocera olea*e inside. The bait plates with the pheromone-impregnated sepiolite are placed in three other cages. A commercial pheromone emitter (Aragonesas Agro, Madrid) is placed on all the baits. In this manner, the aim is to observe if the pheromone incorporated in the baits is able to compete with the attractant emitters, and the flies go to the bait in a larger proportion than what they would if it did not incorporate the attractant.

The attraction is measured by counting, every 5 minutes for 1 hour, the number of males resting exclusively on the bait.

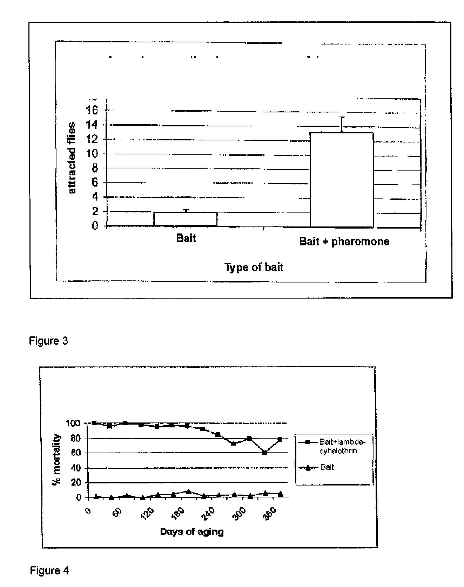

The results are shown in Figure 3. As can be observed in the graph, the attraction for the bait largely improves in the moment in which the specific attractant of the olive fruit fly is incorporated to bait. It is further observed that while the males rest and remain on the commercial pheromone emitter in the baits without pheromone, the percentage of males resting on the bait in the baits incorporating said attractant increases in a spectacular manner.

### EXAMPLE 4:

### Duration of the attractant efficacy of the baits.

To test the duration of the baits, a bait was manufactured containing the following composition: 85% Buminal® as protein attractant, 10% methylcellulose, 2% glycerol, 0.5% nipagin, 0.5% nipasol, 1% lambda-cyhalothrin and 4% Emulsogen EL emulsifier. The bait is placed on Petri dishes of 9 cm in diameter with 80 ml. These baits are placed inside delta traps, in the field, for the aging thereof, and for one year, three plates are collected monthly and taken to the laboratory. In this manner, the aim is to observe how the bait loses insecticide and attractant activity with aging.

The plates are introduced in metal cages in which 60 flies (30 males and 30 females from 5 to 8 days of age) which have been fasting for 24 hours have previously been introduced. Three bait plates are left inside 3 cages for 1 hour, after which time the bait is removed. The mortality produced is measured after 24 hours from the start of bait ingestion.

The mortality results can be observed in Figure 4. It can be deduced from the graph that the insecticide activity of the plates is maintained for at least one year, mortality percentages of almost 80% being obtained at the end of the testing period. This means that both the contained insecticide and the bait have maintained their chemical characteristics practically unaltered for a period of one year, which enables us to ensure that this type of bait can be converted into a fundamental tool for the ecological control of tephritidae.

### EXAMPLE 5:

### Duration of the sterilizing efficacy of baits on Bactrocera oleae and Ceratitis capitata

To test the duration of the sterilizing activity of the baits in field conditions a bait is manufactured containing the following composition: 84% Buminal® as protein attractant, 10% methylcellulose, 2% lufenuron, 4% Emulsogen EL emulsifier. The bait is placed on Petri dishes of 9 cm in diameter with an 80 ml capacity. These baits are placed inside delta traps, in the field, for the aging thereof, and for one year, six plates are collected monthly and taken to the laboratory, where their sterilizing capacity on *Bactrocera* Olae and *Ceratitis capitata* is assessed.

The plates are introduced in metal cages (three cages for each tephritidae) in which 60 olive flies or 60 *Ceratitis* adults (30 males and 30 females from 4-5 days of age, in both cases) which have been fasting for 24 hours have previously been introduced. Each bait plate is left inside the cage for a 5-hour period, after which time the bait is removed. 24 hours later the eggs laid by the females that had access to the bait are collected and seeded on 0.3% agar gel. The eggs are left in a chamber under controlled conditions (26°C and 60% moisture) for 4 days, after which the percentage of hatched eggs is observed. Three bait plates (per species) to which the sterilizing agent was not introduced are also aged in the field as a control.

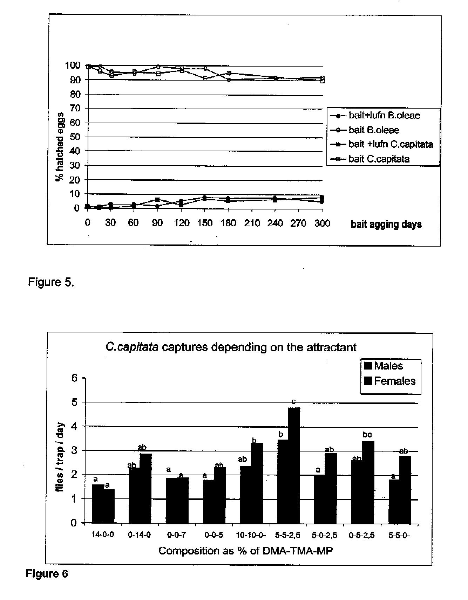

The egg hatching results according to the different ageing times of the baits offered to the flies is shown In the graph in Figure 5.

As is observed in the graph in Figure 5, the hatching of the eggs laid by females that have ingested the bait with lufenuron remains under 10%, in both species, regardless of the ageing time of the bait. This means that the bait activity is maintained for at least 10 months in field conditions, stimulating ingestion and producing the sterilizing effect.

### EXAMPLE 6

### Comparison of aminated attractants for the capture of Ceratitis capitata (Wiedmann)

For testing attractants of the Mediterranean fly, a field of fig trees (Ficus carica) was selected, located in the municipal district of Carlet (Valencia, Spain). Three batteries of fly-traps were positioned, each of which consisted of nine Tephri-trap fly-traps containing nine types of attractants being tested.

The attractants tested are a combination of clorhydrates of dimethylamine (DMA), trimethylamine (TMA) and N-methylpyrrolidine (MP). Each combination of attractants (table 1) was tested with an emitter of ammonium acetate and another of putrescine. The percentages of each of the three components are given by weight with respect to the total weight of the emitter, consisting of a silicoaluminate.

**Table 1. Ratios of the different compositions of attractant tested**

| **Composition** | **% DMA** | **% TMA** | **% MP** |
|---|---|---|---|
| 14-0-0 | 14 | 0 | 0 |
| 0-14-0 | 0 | 14 | 0 |
| 0-0-7 | 0 | 0 | 7 |
| 0-0-5 | 0 | 0 | 5 |
| 10-10-0 | 10 | 10 | 0 |
| 5-5-2.5 | 5 | 5 | 2.5 |
| 5-0-2.5 | 5 | 0 | 2.5 |
| 0-5-2.5 | 0 | 5 | 2.5 |
| 5-5-0 | 5 | 5 | 0 |

The fly-traps of each battery were separated 15 metres and the separation between batteries was greater than 50 metres. Twice a week, the sex of the flies captured with each fly-trap and type of attractant was determined and counted, with the position of the fly-traps being rotated after each reading. The readings were carried out over a period of one month so that each attractant had nine readings of captures per battery, in all the positions. The results are shown in figure 6 where it can be seen that the combination of attractants which most attracts the females is that of TMA and MP with or without DMA. In terms of the number of males attracted, the combinations that include TMA and MP are the most effective though, statistically, they are not differentiated from those containing just TMA.

Finally, it can be emphasised that the compositions containing MP as the sole component, in high concentrations, are less attractive than the compositions with MP and TMA. This lesser attraction could be due to a repellence effect towards MP at high concentrations or to the fact that an enhancing effect of the attraction is produced when the MP is combined with other secondary or tertiary amines.

### EXAMPLE 7

### Efficacy of N-methylpyrrolidine as attractant of females in substitution of the trimethylamine device forming part of the Tripack commercial emitter.

In order to test the efficacy of a methylpyrrolidine emitter compared to the trimethylamine emitter of the tripack, a field capture test was designed. Five batteries of fly-traps were positioned, each of which consisted of three Tephri-trap fly-traps, with each of them having one of the three types of attractant tested.

In all cases, the attractant compositions to evaluate are tested by combining them with a commercial emitter of ammonium acetate.

The compositions to test for the Tripack were:
Attractant 1: 10 g of sepiolite with 0.5 g of CHMP + commercial emitter AA + commercial emitter P
Attractant 2: 10 g of sepiolite with (0.5 g of CIHMP + 0.2 g putrescine) + commercial emitter AA
AA being ammonium acetate, P being putrescine and CIHMP being methylpyrrolidine clorhydrate.

The fly-traps were checked weekly for 8 weeks and the number of males and females captured was quantified. The fly-traps were rotated clockwise each week. The fly-.traps of each battery were separated 15 metres and the separation between batteries was greater than 50 metres.

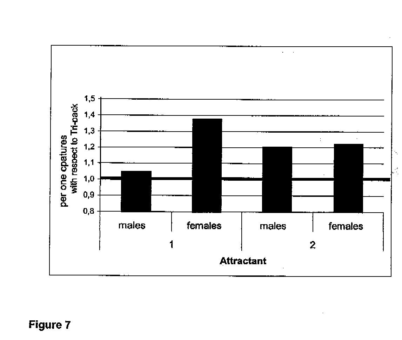

The results are expressed as a fraction of captures with each mix of attractants with regard to those achieved with the Tri-pack (figure 7).

As can be seen in figure 7, the attractant composition 1, in which the commercial emitter of TMA has been replaced with the emitter containing n-methylpyrrolidine, achieves 38% more captures of females than the original tripack. If, in addition, we replace the original putrescine attractant of the tripack with a putrescine attractant formulated together with the n-methylpyrrolidine (attractant composition 2), 22% more captures of males and 20% more of males are achieved compared to the captures of the original tripack.

### EXAMPLE 8

### A field test was conducted In order to check the efficacy of a trap with chemosterilising activity for reducing the population of Ceratitis capitata.

The trap consists of a cover in the shape of a half-cylinder of diameter 15 cm, such that it protects the other components of the trap from the rain and partially from direct solar radiation and from the air. The other two components of the trap are a cylinder of diameter 3.8 cm and length 6 cm which joins the cover with a plate containing the phagostimulant protein bait. This cylinder is hollow and enclosed via its upper part, via which it is attached to the cover. In the lower part of the cylinder, in the coupling zone with the bait plate, the cylinder has certain longitudinal openings which permit the diffusion of the attractants that are released by the emitters in the interior of the cylinder. Placed in the interior of the cylinder is an emitter of trimedlure (TML), an emitter of putrescine, an emitter of ammonium acetate and an emitter of N-methyl pyrrolidine.

The third component of the trap is a cylindrical shape plate of diameter 10 cm and height 1.2 cm and an internal ring of 3.8 cm, by which it links with the cylinder containing the emitters. This plate will contain the attractant bait with the lufenuron as active material with chemosterilising activity. The bait is composed of: 49% by volume of maize protein concentrate, glycerol at 8% volume/volume, meliose at 24% by volume, 3% by weight of lufenuron, 4.75% weight/volume of methylcellulose, 0.25% weight/volume of nipasol and 11 % of water.

The test was conducted in Alcudia in a zone of 500 Has of mandarins, oranges, fruit trees of the genus prunus and persimmons. The treatment was carried out placing 24 sterilising traps per hectare. The traps were hung in the trees on 6 June at a height of 1.5 metres.

The standard treatment consisted of 6 aerial treatments in a strip of 500 metres around the test zone. The treatment was carried out with Malathion CE 50% at 1.5% (v/v) and hydrolysed protein (30% protein content) at 5% (w/v).

In order to assess the efficacy of the method, the population was monitored by means of Tephri-trap type fly-traps baited with emitters of TML Magnet (Aragonesas Agro, Madrid) and in which a tablet of DDVP (Econex, Spain) was placed. A total of 25 fly-traps were positioned in the zone of the chemosterilising treatment and 10 fly-traps in the 200 Has treated with the standard malathion treatment. The fly-traps were checked weekly from 6 June to December.

### Results:

The results of the evolution of the population of Mediterranean fly according to the type of treatment are shown in the following table:

| Evaluation date | Treatment and dose | |
|---|---|---|
| | Malathion 50% (1.5 1/Hl) | Lufenuron 3% (50 g ai/Ha) |
| 13-6 | 1,26477 | 3,762298 |
| 20-6 | 5.441332 | 13.71429 |
| 27-6 | 6.69411 | 16.0 |
| 4-7 | 15.02062 | 39.79286 |
| 11-7 | 13.35622 | 30.55655 |
| 18.7 | 6.852688 | 13.28036 |
| 25.7 | 6.765035 | 11.63571 |
| 1-8 | 7.011359 | 16.45714 |
| 8-8 | 5.054482 | 8.560714 |
| 15-8 | 2.158329 | 5.045113 |
| 22-8 | 1.779165 | 2.277516 |
| 29-8 | 0.721653 | 0.712406 |
| 5-9 | 1.179159 | 1.821964 |
| 12-9 | 2.838206 | 2.547619 |
| 19-9 | 1.463469 | 2.432143 |
| 26-9 | 1.26f4411 | 2.378571 |
| 3-10 | 3.119689 | 4.614286 |
| 10-10 | 2.219964 | 3.505013 |
| 17-10 | 1.738088 | 2.294643 |
| 24-10 | 0.975757 | 1.603571 |
| 31-10 | 0.645041 | 1.126316 |
| 7-11 | 1.51169 | 1.79881 |
| 21-11 | 1.218058 | 1.136695 |
| 28-11 | 0.753523 | 0.341667 |
| 12-12 | 0.211695 | 0.482895 |

In average values, the fly population was:

| | 6 June to 12 December 5 |
|---|---|
| Lufenuron | 3.65±1.96a |
| Malathion | 7.51 ± 4.92b |

Averages with different letters in the same period differ significantly in the paired data test with p < 0.05.

In the results it can be seen that treatment with lufenuron reduces the fly population by significantly more (t = 3.16; n = 28; P = 0.004) than standard treatment with malathion. In this test the reduction was 51.4% of the fly population in the field treated with lufenuron compared to the field treated with malathion.

### Literature

Caballero Garcia de Vinuesa, J I, Alvarado Cordobés, M, Astigarraga Valverde, E, Bernáldez Villar, J M, Chacón Ortega, A. 1971. Efficacy trial of different insecticides applied in spray bait to control the olive fruit fly (Dacus oleae) in the province of Seville. Bol Inf Plagas, May 1972, 93: 25 45.
Howell, J F, Cheikh, M, Harris, E J, Ben Salah, H, Allaya, S, Crnjanski, P. 1975. Mediterranean fruit fly [Ceratitis capitata]: control in Tunisia by strip treatment with a bait spray of technical malathion and protein hydrolyzate. J Econ Entomol, Apr, 68 (2): 247 249.
McQuate, G.T., Cunningham, R.T., Peck, S.L., Moore, P.H. 1999. Suppressing oriental fruit fly populations with phloxine B protein bait spray. Pestic. sci. v. 55 (5) p. 574 576.
Vargas, R.L, Peck, S.L., McQuate, G.T., Jackson, C.G., Stark, J.D., Armstrong, J.W. 2001. Potential for area wide integrated management of Mediterranean fruit fly (Diptera: Tephritidae) with a braconid parasitoid and a novel bait spray. J Econ Entomol. v. 94(4) p. 817 825.
Verma, GD, Sinha, PK. Bait-spray application for the control of melon fruit fly [Dacus cucurbitae]. Pesticides, Aug 1977, 11 (8): 18.

## Claims

1. - A food bait **characterized in that** it comprises at least:
- one or more food components,
- a preservative or a mixture of preservatives, at least one toxic ingredient and
- a fourth component selected between:
- - at least one specific attractant of tephritidae insects, and
- at least a moisture regulator
and **in that** said bait is in the semi-solid gel form.

2. - A food bait **characterized in that** it comprises at least:
- one or more food components,
- a preservative or a mixture of preservatives,
- at least one toxic ingredient and
- at least one specific attractant of tephritidae insects, and
and **in that** said bait is in the semi-solid gel form.

3. - A food bait **characterized in that** it comprises at least:
- one or more food components,
- a preservative or a mixture of preservatives,
- at least one toxic ingredient and
- at least one moisture regulator,
and **in that** said bait is in the semi-solid gel form.

4. - A food bait according to any of claims 1 to 3, **characterized in that** said preservative is chosen from nipagin, nipasol and mixtures thereof.

5. - A food bait according any of claims 1 to 3, **characterized in that** said toxic ingredient is chosen from at least one insecticide, at least one insect growth-regulating agent, and mixtures thereof.

6. - A food bait according any of claims 1, to 4, **characterized in that** said toxic ingredient is one or more insecticides.

7. - A food bait according to any of claims 1 to 4, **characterized in that** said toxic ingredient is one or more sterilizing agents.

8. - A food bait according to claim 1 or 7, **characterized in that** said sterilizing agent is chosen from a benzoylphenyl-urea or an analogue of the juvenile hormone.

9. - A food bait according to any one of claims 1 to 3, **characterized in that** said at least one toxic ingredient is incorporated in the bait in a manner chosen from inclusion of the toxic ingredient in the bait, arrangement of the toxic ingredient on the surface of the bait and both manners.

10. - A food bait according to to any of claims 1 to 3**characterized in that** said at least one toxic ingredient is included in the bait in a manner chosen from homogenization, colloidal dispersion and microcapsules.

11. - A food bait according to claim 1 or 2, **characterized in that** said at least one specific attractant of tephritidae insects is adsorbed on an emitting material chosen from one or more organic materials, one or more inorganic materials and mixtures thereof.

12. - A food bait according to claim 11, **characterized in that** said emitting material is a material chosen from microporous silicates, mesoporous silicates, microporous silicoaluminates, mesoporous silicoaluminates, microporous phosphoaluminates, mesoporous phosphoaluminates and mixtures thereof.

13. - A food bait according to one of claims 1, or 11, **characterized in that** said one or several specific attractants are arranged on the bait in a manner chosen from granular inclusions, powder inclusions, submerged tablet inclusions, and inclusions on the surface of the bait.

14. - A food bait according to claim 1, 2 or 13, **characterized in that** said one or several specific attractants are chosen from:
- ethyl acetate
- acetic acid
- ethanol
- one or several nitrogenous compounds,
- one or several volatile compounds of a host plant or fruit,
- one or several pheromone samples.
- one or several para-pheromone samples,
- one or several kairomone samples and
- mixtures thereof.

15. - A food bait according to claim 1 or 14, **characterized in that** said one or several specific attractants are chosen from methylamine, dimethylamine, trimethylamine, ethylmethylamine, propylmethylamine, isopropylamine, tert-butylamine, 1-methylpyrrolidine, diethylamine, dimethylacetamide, furfuryl alcohol, 5-methyl-3-heptanone, geranyl butyrate, linalool, 1,3-diethylbenzene, 2-nonanone, (E)-2-hexanoic acid, ammonium acetate, ammonium phosphate, ammonia solution from 10% to 30% in water, putrescine, cadaverine, trimedlure, a trimedlure isomer, ceralure, 4-[(4-acetyloxy)phenyl]-2-butanone, methyleugenol, a fluorinated methyleugenol analogue, 1,7-dioxaspiro-5,5-undecane and mixtures thereof.

16. - A food bait according to claim 1 or 15, **characterized in that** said attractant is a mixture of ammonium acetate and putrescine, combined with at least an attractant selected from among dimethylamine, trimethylamine and n-methylpyrrolidine, provided that the attractant is not one of the mixtures: ammonium acetate + putrescine, ammonium acetate + putrescine + trimethylamine, or ammonium acetate + putrescine + methylamine.

17. - A food bait according to any of claims 1 to 3, **characterized in that** said food component is chosen from at least one protein source, at least one carbohydrate and mixtures thereof.

18. - A food bait according to any of claims 1, 3 or 17, **characterized in that** said food component is at least one carbohydrate.

19. - A food bait according to claim 17 or 18, **characterized in that** said at least one carbohydrate is present in an amount comprised between 5% and 50% by weight with respect to the total food weight.

20. - A food bait according to claim 17 or 18, **characterized in that** said carbohydrate is chosen from a commercial invert sugar, glucose, fructose, sucrose, a fructose-enriched sucrose hydrolyzate, maltose, lactose and mixtures thereof.

21. - A food bait according to claim 1, 3 or 17, **characterized in that** said food component comprises at least one protein source.

22. - A food bait according to claim 17 or 21, **characterized in that** said at least one protein source is present in an amount comprised between 2% and 70% by weight with respect to the total food weight.

23. - A food bait according to claim 17, 21 or 22, **characterized in that** said protein source is chosen from commercial corn mash liquor, yeast lysates, soy protein hydrolyzate, and mixtures thereof.

24. - A food bait according to claim 1 or 3, **characterized in that** said bait further comprises at least one moisture regulator.

25. - A food bait according to claim 1, 3 or 24, **characterized in that** said at least one moisture regulator is present in an amount comprised between 3% and 40% by weight with respect to the total food weight.

26. - A food bait according to claim 24 or 25, **characterized in that** said moisture regulator is chosen from glycerol, mannitol, sorbitol, xylitol, propylene glycol and mixtures thereof.

27. - A food bait according to claim 1, 2 or 3, **characterized in that** it further comprises at least one emulsifier.

28. - A food bait according to claim 27, **characterized in that** said at least one emulsifier is present in an amount comprised between 0.05% and 10% by weight with respect to the total food weight.

29. - A food bait according to claim 27 or 29, **characterized in that** said emulsifier is chosen from alkylsulfonates, arylsulfonates, polyalcohol derivatives, polyoxyethylene derivatives, phosphatides and mixtures thereof.

30. - A food bait according to claim 1, 2 or 3, **characterized in that** it further comprises at least one texturizing agent.

31. - A food bait according to claim 30, **characterized in that** said at least on texturizing agent is present in an amount comprised between 0.1% and 10% by weight with respect to the total food weight.

32. - A food bait according to claim 30 or 31, **characterized in that** said texturizing agent is chosen from pectins, alginates, crystalline cellulose, carboxymethylcellulose, methylcellulose and mixtures thereof.

33. - A food bait according to claim 1, **characterized in that** it comprises:
- a preservative or a mixture of preservatives
- at least one toxic ingredient and
- at least one specific attractant of tephritidae insects,
- at least one carbohydrate,
- at least one protein source,
- at least one moisture regulator,
- at least one emulsifier and
- at least one texturizing agent.

34. - A food bait according to claim 1, **characterized in that** it comprises:
- a preservative or a mixture of preservatives in an amount comprised between 0.1 % and 3% by weight with respect to the total food weight,
- at least one toxic ingredient,
- at least one specific attractant of tephritidae insects,
- at least one carbohydrate,
- at least one protein source,
- at least one moisture regulator,
- at least one emulsifier and
- at least one texturizing agent.

35. - A food bait according to claim 1, **characterized in that** it comprises:
- a preservative or a mixture of preservatives in an amount comprised between 0.1 % and 3% by weight with respect to the total food weight,
- at least one toxic ingredient which is one or more sterilizing agents,
- at least one specific attractant of tephritidae insects,
- at least one carbohydrate chosen from a commercial invert sugar, glucose, fructose, sucrose, maltose, lactose and mixtures thereof.
- at least one protein source in an amount comprised between 2% and 70% by weight with respect to the total food weight,
- at least one moisture regulator in an amount comprised between 3% and 40% by weight with respect to the total food weight,
- at least one emulsifier in an amount comprised between 0.05% and 10% by weight with respect to the total food weight,
- at least one texturizing agent in an amount comprised between 0.1% and 10% by weight with respect to the total food weight.

36. - A food bait according to one of claims 33, 34 or 35, **characterized in that** said specific attractant of tephritidae insects is adsorbed in organic emitting materials or inorganic emitting materials.

37. - A food bait according to claim 1, **characterized in that** it comprises:
- a preservative chosen from nipagin, nipasol and mixtures thereof,
- at least one toxic ingredient chosen from at least one insecticide, at least one growth regulating agent and mixtures thereof,
- at least one specific attractant of tephritidae insects adsorbed in organic or inorganic emitting materials, chosen from
- one or several nitrogenous compounds,
- one or several volatile compounds of a host plant or fruit,
- one or several pheromone samples,
- one or several para-pheromone samples,
- one or several kairomone samples and
- mixtures thereof,
- at least one carbohydrate source chosen from a commercial invert sugar, glucose, fructose, sucrose, maltose, lactose and mixtures thereof,
- at least one protein source chosen from commercial corn mash liquor, yeast lysates, soy protein hydrolyzate and mixtures thereof,
- at least one moisture regulator, chosen from glycerol, mannitol, sorbitol, xylitol, propylene glycol and mixtures thereof,
- at least one emulsifier, chosen from alkylsulfonates, arylsulfonates, polyalcohol derivatives, polyoxyethylene derivatives, phosphatides and mixtures thereof,
- at least one texturizing agent, chosen from pectins, alginates, crystalline cellulose, carboxymethylcellulose, methylcellulose and mixtures thereof.

38. - The use of a bait such as that defined in any of the previous claims to control insects of the Tephritidae family.

39. - A food bait, according to clam 38, **characterized in that** the insects of the Tephritidae family are of a species chosen from *Batrocera* spp., *Ceratitis* spp., *Anastrepha* spp. and *Rhagoletis* spp.

40. A food bait according to claim 1, **characterized in that** it comprises:a preservative or a mixture of preservatives in an amount comprised between 0.1% and 3% by weight with respect to the total food weight,
- a chemosterilizing effective amount of lufenuron,
- at least one carbohydrate chosen from a commercial invert sugar, glucose, fructose, sucrose, maltose, lactose and mixtures thereof.
- at least one protein source in an amount comprised between 2% and 70% by weight with respect to the total food weight,
- at least one moisture regulator in an amount comprised between 3% and 40% by weight with respect to the total food weight,
- at least one emulsifier in an amount comprised between 0.05% and 10% by weight with respect to the total food weight,
at least one texturizing agent in an amount comprised between 0.1% and 10% by weight with respect to the total food weight.

41. A food bait according to claim 1, 2 or 3, **characterized in that** said preservative is present in an amount comprised between 0.1 % and 3% by weight with respect to the total food weight.

42. A system for controlling tephritidae insects comprising:
(1) a food bait comprising at least:
- one or more food components,
- a preservative or a mixture of preservatives,
- at least one moisture regulator
and in that said bait is in the semi-solid gel form and
(2) at least one specific attractant of tephritidae insects adjacent to or in close proximity to said food bait.

43. A system according to claim 42 **characterized in that that** said attractant is a mixture of ammonium acetate + 1-methylpyrrolidine + putrescine + trimedlure.

44. A device for controlling tephritidae insects, **characterized in that** it comprises a housing comprising:
- a first receptical containing at least one specific attractant of tephritidae insects; and
- a second receptical containing, in a form accessible for the insects, a food bait comprising:
- one or more food components,
- a preservative or a mixture of preservatives,
- at least one moisture regulator
and **in that** said bait is in the semi-solid gel
and wherein **in that** said first receptical is adjacent to or is in close proximity to said second receptical.

45. A device according to claim 44 which comprises a housing comprising a base tray and a cover:
- said cover comprises a centrally disposed first cup;
- said base tray comprises a centrally disposed second cup and a peripheral receptical for holding the tephritidae insect food bait;
wherein the cover engages the base over the opening of the bait receptical by joining said first and second cups to form a receptical for holding specific attractants of tephritidae insects.

46. A system or device according to claim 45, **characterized in that** the specific attractant of tephritidae insects is the combination of ammonium acetate + 1-methylpyrrolidine + putrescine + trimedlure.

## Amended claims

### Amended claims under Art. 19.1 PCT

**1.** A food bait **characterized in that** it comprises at least:
- one or more food components,
- a preservative or a mixture of preservatives,
- at least one toxic ingredient and
- a fourth component selected between:
- - at least one specific attractant of tephritidae insects, and
- at least a moisture regulator
and **in that** said bait is in the semi-solid gel form.

**2.** A food bait **characterized in that** it comprises at least:
- one or more food components,
- a preservative or a mixture of preservatives,
- at least one toxic ingredient
- at least one specific attractant of tephritidae insects, and
and **in that** said bait is in the semi-solid gel form.

**3.** A food bait **characterized in that** it comprises at least:
- one or more food components,
- a preservative or a mixture of preservatives,
- at least one toxic ingredient and
- at least one moisture regulator,
and **in that** said bait is in the semi-solid gel form.

**4.** A food bait according to any of claims 1 to 3, **characterized in that** said preservative is chosen from nipagin, nipasol and mixtures thereof.

**5.** A food bait according any of claims 1 to 3, **characterized in that** said toxic ingredient is chosen from at least one insecticide, at least one insect growth-regulating agent, and mixtures thereof.

**6.** A food bait according any of claims 1 to 4, **characterized in that** said toxic ingredient is one or more insecticides.

**7.** A food bait according to any of claims 1 to 4, **characterized in that** said toxic ingredient is one or more sterilizing agents.

**8.** A food bait according to claim 1 or 7, **characterized in that** said sterilizing agent is chosen from a benzoylphenyl-urea or an analogue of the juvenile hormone.

**9.** A food bait according to any one of claims 1 to 3, **characterized in that** said at least one toxic ingredient is incorporated in the bait in a manner chosen from inclusion of the toxic ingredient in the bait, arrangement of the toxic ingredient on the surface of the bait and both manners.

**10.** A food bait according to to any of claims 1 to 3, **characterized in that** said at least one toxic ingredient is included in the bait in a manner chosen from homogenization, colloidal dispersion and microcapsules.

**11.** A food bait according to claim 1 or 2, **characterized in that** said at least one specific attractant of tephritidae insects is adsorbed on an emitting material chosen from one or more organic materials, one or more inorganic materials and mixtures thereof.

**12.** A food bait according to claim 11, **characterized in that** said emitting material is a material chosen from microporous silicates, mesoporous silicates, microporous silicoaluminates, mesoporous silicoaluminates, microporous phosphoaluminates, mesoporous phosphoaluminates and mixtures thereof.

**13.** A food bait according to one of claims 1, or 11, **characterized in that** said one or several specific attractants are arranged on the bait in a manner chosen from granular inclusions, powder inclusions, submerged tablet inclusions, and inclusions on the surface of the bait.

**14.** A food bait according to claim 1, 2 or 13, **characterized in that** said one or several specific attractants are chosen from:
- ethyl acetate
- acetic acid
- ethanol
- one or several nitrogenous compounds,
- one or several volatile compounds of a host plant or fruit,
- one or several pheromone samples,
- one or several para-pheromone samples,
- one or several kairomone samples and
- mixtures thereof.

**15.** A food bait according to claim 1 or 14, **characterized in that** said one or several specific attractants are chosen from methylamine, dimethylamine, trimethylamine, ethyl methylamine, propylmethylamine, isopropylamine, tert-butylamine, 1-methylpyrrolidine, diethylamine, dimethylacetamide, furfuryl alcohol, 5-methyl-3-heptanone, geranyl butyrate, linalool, 1,3-diethylbenzene, 2-nonanone, (E)-2-hexanoic acid, ammonium acetate, ammonium phosphate, ammonia solution from 10% to 30% in water, putrescine, cadaverine, trimedlure, a trimedlure isomer, ceralure, 4-[(4-acetyloxy)phenyl]-2-butanone, methyleugenol, a fluorinated methyleugenol analogue, 1,7-dioxaspiro-5,5-undecane and mixtures thereof.

**16.** A food bait according to claim 1 or 15, **characterized in that** said attractant is a mixture of ammonium acetate and putrescine, combined with at least an attractant selected from among dimethylamine, trimethylamine and n-methylpyrrolidine, provided that the attractant is not one of the mixtures: ammonium acetate + putrescine, ammonium acetate + putrescine + trimethylamine, or ammonium acetate + putrescine + methylamine.

**17.** A food bait according to claim 1 or 15, **characterized in that** said attractant is a mixture of ammonium acetate combined with at least an attractant selected from among dimethylamine, trimethylamine and n-methylpyrrolidine.

**18.** A food bait according to claim 1 or 15, **characterized in that** said attractant is a mixture of ammonium acetate and n-methylpyrrolidine.

**19.** A food bait according to any of claims 1 to 3, **characterized in that** said food component is chosen from at least one protein source, at least one carbohydrate and mixtures thereof.

**20.** A food bait according to any of claims 1, 3 or 19, **characterized in that** said food component is at least one carbohydrate.

**21.** A food bait according to claim 19 or 20, **characterized in that** said at least one carbohydrate is present in an amount comprised between 5% and 50% by weight with respect to the total food weight.

**22.** A food bait according to claim 19 or 20, **characterized in that** said carbohydrate is chosen from a commercial invert sugar, glucose, fructose, sucrose, a fructose-enriched sucrose hydrolyzate, maltose, lactose and mixtures thereof.

**23.** A food bait according to claim 1, 3, or 19, **characterized in that** said food component comprises at least one protein source.

**24.** A food bait according to claim 19 or 23, **characterized in that** said at least one protein source is present in an amount comprised between 2% and 70% by weight with respect to the total food weight.

**25.** A food bait according to claim 19, 23 or 24, **characterized in that** said protein source is chosen from commercial corn mash liquor, yeast lysates, soy protein hydrolyzate, and mixtures thereof.

**26.** A food bait according to claim 1 or 3, **characterized in that** said bait further comprises at least one moisture regulator.

**27.** A food bait according to claim 1, 3 or 27, **characterized in that** said at least one moisture regulator is present in an amount comprised between 3% and 40% by weight with respect to the total food weight.

**28.** A food bait according to claim 26 or 27, **characterized in that** said moisture regulator is chosen from glycerol, mannitol, sorbitol, xylitol, propylene glycol and mixtures thereof.

**29.** A food bait according to claim 1, 2 or 3, **characterized in that** it further comprises at least one emulsifier.

**30.** A food bait according to claim 29, **characterized in that** said at least one emulsifier is present in an amount comprised between 0.05% and 10% by weight with respect to the total food weight.

**31.** A food bait according to claim 29 or 30, **characterized in that** said emulsifier is chosen from alkylsulfonates, arylsulfonates, polyalcohol derivatives, polyoxyethylene derivatives, phosphatides and mixtures thereof.

**32.** A food bait according to claim 1, 2 or 3, **characterized in that** it further comprises at least one texturizing agent.

**33.** A food bait according to claim 32, **characterized in that** said at least on texturizing agent is present in an amount comprised between 0.1% and 10% by weight with respect to the total food weight.

**34.** A food bait according to claim 32 or 33, **characterized in that** said texturizing agent is chosen from pectins, alginates, crystalline cellulose, carboxymethylcellulose, methylcellulose and mixtures thereof.

**35.** A food bait according to claim 1, **characterized in that** it comprises:
- a preservative or a mixture of preservatives
- at least one toxic ingredient and
- at least one specific attractant of tephritidae insects,
- at least one carbohydrate,
- at least one protein source,
- at least one moisture regulator,
- at least one emulsifier and
- at least one texturizing agent.

**36.** A food bait according to claim 1, **characterized in that** it comprises:
- a preservative or a mixture of preservatives in an amount comprised between 0.1% and 3% by weight with respect to the total food weight,
- at least one toxic ingredient,
- at least one specific attractant of *Tephritidae* insects,
- at least one carbohydrate,
- at least one protein source,
- at least one moisture regulator,
- at least one emulsifier and
at least one texturizing agent.

**37.** A food bait according to claim 1, **characterized in that** it comprises:
- a preservative or a mixture of preservatives in an amount comprised between 0.1% and 3% by weight with respect to the total food weight,
- at least one toxic ingredient which is one or more sterilizing agents,
- at least one specific attractant of *Tephritidae* insects,
- at least one carbohydrate chosen from a commercial invert sugar, glucose, fructose, sucrose, maltose, lactose and mixtures thereof.
- at least one protein source in an amount comprised between 2% and 70% by weight with respect to the total food weight,
- at least one moisture regulator in an amount comprised between 3% and 40% by weight with respect to the total food weight,
- at least one emulsifier in an amount comprised between 0.05% and 10% by weight with respect to the total food weight,
- at least one texturizing agent in an amount comprised between 0.1% and 10% by weight with respect to the total food weight.

**38.** A food bait according to one of claims 35, 36 or 37, **characterized in that** said specific attractant of *Tephritidae* insects is adsorbed in organic emitting materials or inorganic emitting materials.

**39.** A food bait according to claim 1, **characterized in that** it comprises:
- a preservative chosen from nipagin, nipasol and mixtures thereof,
- at least one toxic ingredient chosen from at least one insecticide, at least one growth regulating agent and mixtures thereof,
- at least one specific attractant of tephritidae insects adsorbed in organic or inorganic emitting materials, chosen from
- one or several nitrogenous compounds,
- one or several volatile compounds of a host plant or fruit,
- one or several pheromone samples,
- one or several para-pheromone samples,
- one or several kairomone samples and
- mixtures thereof,
- at least one carbohydrate source chosen from a commercial invert sugar, glucose, fructose, sucrose, maltose, lactose and mixtures thereof,
- at least one protein source chosen from commercial corn mash liquor, yeast lysates, soy protein hydrolyzate and mixtures thereof,
- at least one moisture regulator, chosen from glycerol, mannitol, sorbitol, xylitol, propylene glycol and mixtures thereof,
- at least one emulsifier, chosen from alkylsulfonates, arylsulfonates, polyalcohol derivatives, polyoxyethylene derivatives, phosphatides and mixtures thereof,
- at least one texturizing agent, chosen from pectins, alginates, crystalline cellulose, carboxymethylcellulose, methylcellulose and mixtures thereof.

**40.** The use of a bait such as that defined in any of the previous claims to control insects of the Tephritidae family.

**41.** A food bait, according to claim 40, **characterized in that** the insects of the Tephritidae family are of a species chosen from *Batrocera* spp., *Ceratitis* spp., *Anastrepha* spp. and *Rhagoletis* spp.

**42.** A food bait according to claim 1, **characterized in that** it comprises:a preservative or a mixture of preservatives in an amount comprised between 0.1% and 3% by weight with respect to the total food weight,
- a chemosterilizing effective amount of lufenuron,
- at least one carbohydrate chosen from a commercial invert sugar, glucose, fructose, sucrose, maltose, lactose and mixtures thereof.
- at least one protein source in an amount comprised between 2% and 70% by weight with respect to the total food weight,
- at least one moisture regulator in an amount comprised between 3% and 40% by weight with respect to the total food weight,
- at least one emulsifier in an amount comprised between 0.05% and 10% by weight with respect to the total food weight,
at least one texturizing agent in an amount comprised between 0.1% and 10% by weight with respect to the total food weight.

**43.** A food bait according to claim 1, 2 or 3, **characterized in that** said preservative is present in an amount comprised between 0.1% and 3% by weight with respect to the total food weight.

**44.** A system for controlling *Tephritidae* insects comprising:
(1) a food bait comprising at least:
- one or more food components,
- a preservative or a mixture of preservatives,
- at least one toxic ingredient,
- at least one moisture regulator
and in that said bait is in the semi-solid gel form and
(2) at least one specific attractant of *Tephritidae* insects adjacent to or in close proximity to said food bait.

**45.** A system according to claim 44, **characterized in that** the specific attractant of *Tephritidae* insects is a combination of ammonium acetate + 1-methylpyrrolidine + trimedlure.

**46.** A system according to claim 44, **characterized in that** the specific attractant of *Tephritidae* insects is a combination of ammonium acetate + 1-methylpyrrolidine.

**47.** A device for controlling *Tephritidae* insects **characterized in that** it comprises a housing comprising:
- a first receptical containing at least one specific attractant of *Tephritidae* insects; and
- a second receptical containing, in a form accessible for the insects, a food bait comprising at least:
- one or more food components,
- a preservative or a mixture of preservatives,
- at least one toxic ingredient,
- at least one moisture regulator
and **in that** said bait is in the semi-solid gel
and wherein **in that** said first receptical is adjacent to or is in close proximity to said second receptical.

**48.** A device according to claim 47 **characterised in that** it comprises a housing comprising a base tray and a cover:
- said cover comprises a centrally disposed first cup;
- said base tray comprises a centrally disposed second cup and a peripheral receptical for holding the *Tephritidae* insect food bait;
wherein the cover engages the base over the opening of the bait receptical by joining said first and second cups to form a receptical for holding specific attractants of *Tephritidae* insects.

**49.** A device according to claim 47, **characterised in that** the specific attractant of *Tephritidae* insects is a combination of ammonium acetate + 1-methylpyrrolidine + trimedlure.

**50.** A device according to claim 47 **characterised in that** the specific attractant of *Tephritidae* insects is a combination of ammonium acetate + 1-methylpyrrolidine.
